# EUROPÄISCHE PATENTSCHRIFT

(11) **EP 2 782 222 B1**
(45) Veröffentlichungstag und Bekanntmachung des Hinweises auf die Patenterteilung: **11.10.2017**
(21) Anmeldenummer: 14000849.1
(22) Anmeldetag: 11.03.2014
(51) Int. Cl.: H02K 15/00, H02K 17/16

(54) **Kurzschlussläufer sowie Verfahren zur Herstellung eines Kurzschlussläufers**
Squirrel cage rotor and method for producing a squirrel cage rotor
Rotor en court-circuit et procédé de fabrication d'un rotor en court-circuit

(30) Priorität: 22.03.2013 DE 102013005050
(43) Veröffentlichungstag der Anmeldung: 24.09.2014
(73) Patentinhaber: Wieland-Werke AG, 89079 Ulm (DE)
(72) Erfinder: Voggeser, Volker, 89250 Senden (DE); Thumm, Gerhard, 89155 Erbach (DE); Wolf, Michael, 89079 Ulm (DE)

(56) Entgegenhaltungen:
- EP-A1- 1 657 800
- GB-A- 518 045
- JP-A- S5 854 845
- US-A- 2 368 295

## Beschreibung

Die Erfindung betrifft einen Kurzschlussläufer gemäß dem Oberbegriff des Anspruchs 1 sowie ein Verfahren zur Herstellung eines Kurzschlussläufers gemäß dem Oberbegriff des Anspruchs 12.

Bei bekannten Kurzschlussläufern enthält ein mit geschlossenen Nuten versehenes Läuferblechpaket in den Nuten eingebettete Käfigstäbe aus elektrisch gut leitendem Material, deren Enden über die Stirnseiten des Läuferblechpakets vorstehen und mit kompakten Kurzschlussringen hart verlötet sind. Die Enden der Käfigstäbe ragen in eingedrehte Ringnuten in den Kurzschlussringen, die das Bett für das Hartlot bilden und mit diesem gefüllt sind, so dass sich ein relativ großer Bedarf an Hartlot ergibt. Zur Verhinderung des Aufblätterns des Läuferblechpaketes und von störenden Schwingungen werden stirnseitig gesonderte kompakte Druckringe an das Läuferblechpaket angepresst. Um ferner eine Axialverschiebung der Käfigstäbe in den Nuten des Läuferblechpakets zu verhindern, sind sie mit dem Läuferblechpaket mechanisch fest verbunden.

Aus der Druckschrift DE 34 21 537 A1 ist ein Kurzschlussläufer mit Käfigwicklung bekannt. Die Käfigwicklung umfasst elektrisch leitende Käfigstäbe, die in geschlossenen Nuten eines Läuferblechpaketes angeordnet sind und über dessen Stirnseiten vorragen. Die überstehenden Enden sind mit elektrisch gut leitenden Kurzschlussringen leitend verbunden. Die Kurzschlussringe sind, den Läuferblechen entsprechend, als genutete Blechpakete aus elektrisch gut leitendem Werkstoff ausgebildet und als stirnseitige Druckkörper an der ganzen Fläche wärmeübertragend eng am Läuferblechpaket anliegend in ihren geschlossenen Nuten mit den Käfigstäben fest verbunden. Eine Besonderheit ist, dass die elektrisch leitenden Einzelbleche für die Kurzschlussringe eine größere Dicke als die Läuferbleche aufweisen, im übrigen jedoch die gleiche Form und Größe wie diese haben. Bei der Herstellung eines Kurzschlussläufers werden die Kurzschlussringe und die Läuferbleche gemeinsam paketiert, mit den stirnseitig eingeschobenen Käfigstäben bestückt und danach unter axialer Pressung des gesamten Paketes die Enden der Käfigstäbe mit den Kurzschlussringen hart verlötet.

Des Weiteren ist aus der Druckschrift JP S58 - 54 845 A ein Kurzschlussläufer bekannt, bei dem ein Kurzschlussring mit den Enden der Käfigstäbe verschweißt ist. Die Schweißnaht verläuft entlang einer durch Abschrägungen im Material gebildeten Nut.

Der Erfindung liegt die Aufgabe zugrunde, die Fügeverbindungen eines Kurzschlussläufers weiterzubilden.

Die Erfindung wird bezüglich eines Kurzschlussläufers durch die Merkmale des Anspruchs 1 und bezüglich eines Verfahrens zur Herstellung eines Kurzschlussläufers durch die Merkmale des Anspruchs 12 wiedergegeben. Die weiteren rückbezogenen Ansprüche betreffen vorteilhafte Aus- und Weiterbildungen der Erfindung.

Die Erfindung schließt einen Kurzschlussläufer ein, mit Welle, Läuferblechpaket mit im Innern angeordneten Käfigstäben und Kurzschlussringen, wobei zumindest ein Teil eines Kurzschlussringes aus einem Scheibenpaket besteht, welches lagenweise aus Scheiben mit Ausnehmungen aufgebaut ist, durch welche die Enden der Käfigstäbe aus dem Läuferblechpaket hindurchtreten, wobei, die Scheiben eines Kurzschlussringes, ausgehend von der Mantelfläche als Stirnseite, über den Außenumfang zumindest eine Fase oder Stufe aufweisen, welche radial einwärts gerichtet ist, und wobei benachbarte Scheiben durch ihre jeweiligen Fasen oder Stufen im Scheibenpaket eine Nut ausbilden, in der zumindest abschnittsweise eine Fügeverbindung vorhanden ist. Der Kurzschlussläufer ist insbesondere für eine Verwendung in einer Asynchronmaschine vorgesehen.

Die Erfindung geht dabei von der Überlegung aus, dass das Läuferblechpaket mit der Welle und den Kurzschlussringen nach dem Fügevorgang ein kompaktes Kurzschlussläuferbauteil ergibt. Im Läuferblechpaket und den Kurzschlussringen sind Käfigstäbe hindurchgeführt, die mit dem Material der Kurzschlussringe elektrisch leitend verbunden sind. Hierzu haben die Käfigstäbe im Bezug auf das Läuferblechpaket eine Überlänge, so dass diese in Ausnehmungen in die Kurzschlussringe hineinragen. Die Kurzschlussringe werden an beiden Seiten des Läuferblechpakets auf der Welle positioniert. Jeder Kurzschlussring besteht selbst aus einem Scheibenpaket, das aus mehreren einzelnen Scheiben mit gleichem Durchmesser aufgebaut ist. Die Scheiben selbst weisen auf der Scheibenfläche so viele Ausnehmungen auf, wie Käfigstäbe zum Aufbau eines Kurzschlussläufers benötigt werden. Diese zunächst lose zueinander angeordneten Einzelbauteile müssen zu einem kompakten Kurzschlussläufer verbunden werden. Zur Herstellung einer Fügeverbindung ist die Stirnseite der Scheiben, ausgehend von der Mantelfläche jedes Kurzschlussrings, mit zumindest einer Fase oder Stufe ausgestattet. Betrachtet man die Geometrie einer Scheibe als Zylinder, so ist die Mantelfläche die stirnseitige Hüll- bzw. Umfangsfläche, also der in radialer Blickrichtung äußerste Bereich der Oberfläche. Grund- bzw. Deckfläche des Zylinders sind dann die Flächen senkrecht zu seiner Rotationsachse. Dies hat zur Folge, dass zu einem Scheibenpaket angeordnete benachbarte Scheiben durch die Fase oder Stufe einen kleinen Spalt als Nut aufweisen, entlang dem eine Fügeverbindung hergestellt werden kann. Eine Nut zwischen den Scheiben erstreckt sich um den Umfang jedes Scheibenpakets. Die Fasen oder Stufen sind in einer bevorzugten Ausführungsform an einer Scheibe so ausgebildet, dass sie sich radial ungefähr bis zu den Ausnehmungen für die Käfigstäbe erstrecken. Auf diese Weise wird eine Nut gebildet, die radial bis in das Niveau der Käfigstäbe hineinreichen kann. Um die einzelnen Scheiben im Scheibenpaket mit dem Käfigstab zu verbinden, wird entlang dieser Nut eine Fügeverbindung hergestellt, die sowohl die Einzelteile mechanisch wie auch elektrisch miteinander verbindet. Zwischen den aneinander liegenden Scheibenflächen benachbarter Scheiben ist lediglich eine Fügeebene vorhanden.

Alternativ können die aus dem Blechpaket austretenden Stäbe im Bereich der durch Fasen oder Stufen gebildeten Nut auch nicht freiliegen. Die Ausnehmungen in den Scheiben sind radial betrachtet folglich, radial einwärts betrachtet, etwas innerhalb der Nut der Scheiben positioniert, jedoch so, dass die Stäbe beim Schweißen dennoch im Bereich der Aufschmelzzone liegen. Die Stabbereiche in der Nähe einer Nut werden beim Fügen folglich durch eine mittels Laserstrahl oder Elektronenstrahl erzeugte Schmelze umströmt und mit den Scheiben elektrisch leitend verbunden. Wesentlich dabei ist, dass wiederum zwischen den aneinander liegenden Scheibenflächen benachbarter Scheiben lediglich eine Fügeebene vorhanden ist.

Mit anderen Worten: In Radialrichtung erstreckt sich folglich eine frei zugängliche Öffnung zwischen benachbarten Scheiben bis auf das Niveau der Käfigstäbe, um die Einzelteile sowohl elektrisch wie auch mechanisch miteinander fügen zu können. Auf diese Weise wird ein ausreichender elektrischer Kontakt zur Stromleitung zum Betrieb einer Asynchronmaschine hergestellt. Die in jeder Scheibe eingebrachten Ausnehmungen sind in Form und Größe an die Käfigstäbe angepasst, so dass diese mit geringem Spiel positioniert werden können. Die Scheiben der Kurzschlussringe können dabei entweder aus Bandmaterial flächig geschlossene Einzelbauteile darstellen oder auch als offene Scheibe, einem Sprengring gleich, gefertigt sein. Die Ausnehmungen in jeder Scheibe können beispielsweise erodiert, gebohrt oder gestanzt sein. Denkbar ist auch, dass jede einzelne Scheibe auf der Berührungsfläche mit der benachbarten Scheibe eine Struktur aufweist, die einen geringen, jedoch für eine Fügeverbindung vorteilhaften Spalt, verursacht. Auf diese Weise kann auch über den Bereich der Fase oder Stufe hinaus radial in die Tiefe eine weitere Zone für eine Fügeverbindung hergestellt werden.

Der besondere Vorteil besteht darin, dass durch einen eng begrenzten jedoch ausreichenden Fügebereich im Bereich der Nuten, eine ausreichende mechanische Festigkeit des gesamten Bauteils vorhanden ist. Ebenso stellt sich auch ein zufriedenstellender elektrischer Kontakt der Käfigstäbe mit den Kurzschlussringen ein. Auch bei höherer Temperatur ablaufender Fügeverfahren entsteht eine lokale Erhitzung nur im Fügespalt zwischen zwei Scheiben, ohne das übrige Bauteil und insbesondere das Läuferblechpaket thermisch in Mitleidenschaft zu ziehen. Die für Kurzschlussringe verwendeten Legierungen haben meist durch ihre gute elektrische Leitfähigkeit auch eine ausreichende thermische Leitfähigkeit, wodurch die beim Fügen eingebrachte thermische Energie schnell durch Wärmespreizung abgeführt wird. Auf diese Weise werden die einzelnen Scheiben im Bereich des Außenumfangs gefügt und fest miteinander verbunden. Je nach Fügeverfahren wird besondere Sorgfalt auf die Gestalt und Ausbildung der Fase oder Stufe, die letztendlich den Fügespalt bestimmt, gelegt. Die Fase selbst kann an jeder Scheibe beispielsweise eine ebene Fläche darstellen, die im gefügten Zustand mit einer benachbarten Scheibe eine V-förmige Nut ausbildet. Auf der anderen Seite ist auch denkbar, dass die Fase einen parabelartigen Verlauf aufweist, so dass im gefügten Zustand eine U-förmige Nut entsteht. Je nach Fügeverfahren können auf diese Weise geometrisch günstige Fügeverbindung geschaffen werden.

In bevorzugter Ausgestaltung der Erfindung können die Stabenden mit dem Scheibenpaket eines Kurzschlussringes elektrisch leitend gefügt sein. Üblicherweise wird ein bloßes Zusammenfügen der Stabenden in Kurzschlussringen zu einer nicht ausreichenden elektrischen Verbindung führen.

Die gewünschte elektrisch leitende Verbindung kann entweder dadurch bewerkstelligt werden, dass das Material der einzelnen Scheiben kurzzeitig lokal angeschmolzen wird und sich benachbarte Scheiben entlang dem Fügespalt mit dem Material der Stabenden verbinden. Auf der anderen Seite ist es auch denkbar, dass eine elektrisch leitende Verbindung durch zusätzliches Material, wie beispielsweise Hartlot, hergestellt wird, das in den nutförmigen Bereich eingebracht ist. Bei derartigen Fügeverbindungen reicht üblicherweise die durch die Fasen oder Stufen gebildete Nut etwas tiefer, so dass beim Fügen das Lotmaterial auch die Oberfläche der Käfigstäbe erreicht. In diesem Fall reicht dann die durch die Fase oder Stufe gebildete Nut radial soweit in die Tiefe, dass der gesamte Umfang eines Käfigstabes vom Lot umströmt werden kann. Gegebenenfalls sind dann die Ausnehmungen für die Kurzschlussstäbe etwas größer als der Durchmesser der Stäbe selbst ausgeführt, so dass Lot auch axial durch einen verbleibenden Spalt eindringen kann. So wird eine besonders gute elektrische Verbindung zwischen den Käfigstäben und dem Kurzschlussring hergestellt.

Vorteilhafterweise können die Fügeverbindungen umfänglich verlaufen. Hierdurch wird sowohl eine mechanische wie auch elektrisch leitende Verbindung im ausreichenden Maße hergestellt. Eine umfänglich, d. h. entlang einer Nut, durchgängig verlaufende Fügeverbindung ist auch im Verfahrensablauf einiger Fügeverfahren vorteilhaft.

Bei einer vorteilhaften Ausführungsform der Erfindung können die Fügeverbindungen Schweißverbindungen oder Lötverbindungen sein. Hierbei werden das Laserstrahlschweißen oder Elektronenstrahlschweißen bevorzugt. Besonders für um den gesamten Umfang verlaufenden Fügeverbindungen sind derartige Schweiß- oder Lötverbindungen besonders geeignet. Die dabei entstehende Schweißraupe entsteht im Inneren der zwischen den Scheiben vorhandenen Nut und kann diese gegebenenfalls bis zur Scheibenstirnfläche vollständig ausfüllen. Insbesondere bei einem Einbringen von zusätzlichem Lotmaterial kann die Nut durch eine Lötverbindung vollständig aufgefüllt sein. Beide Fügeverbindungsarten bewirken eine gute elektrische Leitfähigkeit in Verbindung mit einer mechanischen Festigkeit.

Bei einer vorteilhaften Ausführungsform der Erfindung können die Scheiben eine Dicke von 2 mm bis 10 mm, bevorzugt 3 bis 6 mm, aufweisen. Mit dieser vorgegebenen Scheibendicke kann mit ungefähr drei bis fünf Scheiben bereits ein kompletter Kurzschlussring aufgebaut werden. Die Anzahl der Fügeverbindungen ist hierdurch entsprechend gering, so dass eine wirtschaftliche Herstellung der Kurzschlussläufer ermöglicht wird. Die Scheibendicke selbst ist so gewählt, dass entweder durch Stanzen oder durch anderweitige Trennverfahren, beispielsweise aus einem Bandmaterial, ein Einzelbauteil herausgearbeitet werden kann. Insbesondere bei bevorzugten Dicken zwischen 3 und 6 mm ist eine wirtschaftliche Herstellung, ausgehend von Bandmaterial, sichergestellt. Auf der anderen Seite sollte die Scheibendicke möglichst groß gewählt werden, um mit wenigen Scheiben einen kompletten Kurzschlussring aufbauen zu können.

Vorteilhafterweise können die Scheiben aus einer Stahllegierung oder einer Kupferlegierung, insbesondere aus einer Cu-Cr-Zr-, Cu-Ag- oder Al-Legierung, bestehen. Die jeweilige Legierungsauswahl beruht auf einem ausgewogenem Verhältnis einer möglichst guten elektrischen Leitfähigkeit verbunden mit einer ausreichenden Zugfestigkeit. Die zwei in der bevorzugen Auswahl genannten Legierungen erfüllen diese Erfordernisse. Ein weiterer Aspekt in der Auswahl der Legierungstypen ist auch eine möglichst geringe Anfälligkeit gegen Korrosionsangriffe.

In vorteilhafter Ausgestaltung der Erfindung können die Scheiben am Außenumfang zwei symmetrisch zueinander liegende Fasen oder Stufen aufweisen. Symmetrisch zueinander liegende Fasen oder Stufen bewirken im zusammengefügten Zustand mehrerer Scheiben ebenfalls eine symmetrisch ausgebildete Nut für den Fügeprozess. Die Nutform und Nutgröße wird letztendlich durch die Ausgestaltung der Fasen oder Stufen an den Scheiben bestimmt. Hierdurch wird im Fügeprozess eine gleichmäßige Anbindung beider sich berührender Scheiben realisiert.

Bei einer vorteilhaften Ausführungsform der Erfindung können die Käfigstäbe radial zum Zentrum hin vorgespannt sein. Im Betrieb werden durch eine schnelle Rotation der Kurzschlussläufer radial Fliehkräfte erzeugt, die das Material außerordentlich belasten. Diesen Fliehkräften wirken die radial zum Zentrum hin vorgespannten Käfigstäbe entgegen, so dass die Materialbelastung, insbesondere im Bereich der Kurzschlussringe, deutlich sinkt. Auf diese Weise können auch Materialien zur Ausgestaltung der Kurzschlussringe verwendet werden, die in erster Linie auf eine gute elektrische Leitfähigkeit optimiert sind.

Vorteilhafterweise kann ein Kurzschlussring zumindest teilweise von einem Gehäuse umschlossen sein. Bei der Verwendung von einem Gehäuse an den jeweiligen Kurzschlussringen ist es erforderlich, die Dimensionierung der Kurzschlussringe entsprechend anzupassen. Üblicherweise wird das Gehäuse volumenfüllend vom Kurzschlussring ausgefüllt. Die Außenkontur eines Gehäuses ist dann üblicherweise auch bündig mit der Außenkontur eines Blechpakets. Insbesondere dienen Gehäuse auch dazu, einen korrosiven Angriff auf die Kurzschlussringlegierung zu vermeiden.

Bei einer vorteilhaften Ausführungsform der Erfindung kann um den Umfang eines Kurzschlussringes als Gehäuse ein Spannring angeordnet sein. Hierdurch wird zum bloßen Korrosionsschutz eine zusätzliche Eigenschaft eingesetzt. Spannringe, die um den Umfang eines Kurzschlussrings greifen, sollen radiale Kräfte kompensieren, die beim Einsatz eines Kurzschlussläufers auftreten. Neben den mechanisch vorteilhaften Eigenschaften eines Spannrings kann dieser auch noch so ausgebildet sein, dass er einen Beitrag zur elektrischen Leitfähigkeit eines Kurzschlussrings liefert. Eine geeignete Werkstoffauswahl in diesem Sinne ist, den Spannring zuerst bezüglich Zugfestigkeit zu optimieren und in zweiter Linie eine ausreichende elektrische Leitfähigkeit aufrechtzuerhalten. Auf diese Weise können auch Scheiben und Spannringe aus ganz unterschiedlichen Legierungen einzeln ausgeführt sein, die im Sinne der Zugfestigkeit und der elektrischen Leitfähigkeit optimiert sind.

Weiterhin bevorzugt kann als Gehäuse stirnseitig ein Abschlussdeckel angeordnet sein. Ein Gehäusedeckel kann auch so ausgeführt sein, dass mit ihm eine axiale Vorspannung des auf der Welle angeordneten Blechpakets und den jeweiligen Scheiben eingestellt wird. Die Vorspannung dient dazu, beim Fügeprozess der einzelnen Scheiben eine kompakte Struktur zu erhalten. Außerdem können Abschlussdeckel wiederum einen gewissen Korrosionsschutz darstellen. Ein Abschlussdeckel kann aber auch eine endständige Scheibe darstellen, bei der die Ausnehmungen nur bis in eine gewisse Tiefe in die Scheibe hineinreichen und keinen Durchbruch aufweisen. So ist eine Scheibenseite geeignet, die äußersten Enden der Käfigstäbe in sich aufzunehmen. Wohingegen die andere Scheibenseite einen ebene Fläche ist, die den Kurzschlussring stirnseitig abschließt. Derartige Abschlussdeckel können auch an den jeweiligen Stirnflächen Kühlrippen aufweisen. Die Stirnseite der Scheibe für einen Kurzschlussring eines erfindungsgemäßen Kurzschlussläufers weist über den Außenumfang zumindest eine Fase oder Stufe auf, welche sich radial in den Bereich der Ausnehmungen erstreckt, in denen die Stabenden von Käfigstäben anordenbar sind. Hierbei können die Scheiben lagenweise zu einem Scheibenpaket zusammengesteckt und mechanisch oder stoffschlüssig vorab verbunden werden.

Eine Verbindung kann beispielsweise durch Stanzpaketieren oder Laserschweißen erfolgen. Auf diese Weise erhält man einen kompakten Kurzschlussring, das als gesondertes Einzelbauteil dienen und besonders gut in das Gesamtsystem eingebunden werden kann.

Ein weiterer Aspekt der Erfindung schließt ein Verfahren zur Herstellung eines erfindungsgemäßen Kurzschlussläufers ein, wobei:
- das Läuferblechpaket auf der Welle angeordnet wird,
- auf der Welle Kurzschlussringe angeordnet werden, die aus um den Außenumfang angefasten Scheiben mit Ausnehmungen lagenweise zu einem Scheibenpaket zusammengesteckt werden, wobei die Enden der Käfigstäbe aus dem Läuferblechpaket durch die Ausnehmungen hindurchtreten können,
- im Innern des Läuferblechpakets und in den Ausnehmungen der Scheiben Käfigstäbe angeordnet werden,
- um den Außenumfang im Bereich der Fase oder Stufe eine Fügeverbindung hergestellt wird.

Bei einer vorteilhaften Ausführungsform der Erfindung können vor dem Herstellen der Fügeverbindung das Scheibenpaket und das Läuferblechpaket in sich verwunden werden. Durch das Verwinden des gesamten Pakets werden die Käfigstäbe aus der üblichen Position parallel zur Welle um einen gewissen Winkel herausgedreht. Hierzu ist es üblicherweise notwendig, etwas größere Ausnehmungen im Blechpaket und Scheibenpaket auszugestalten, um ein Verdrehen zu ermöglichen. Durch die anschließende Fügeverbindung wird die gesamte Struktur stabilisiert. Auch ist angedacht, die Ausnehmungen im Blechpaket und Scheibenpaket nicht senkrecht zur jeweiligen Scheibenhauptfläche, sondern bereits unter einem Verdrehwinkel auszubilden. Auf diese Weise werden die Durchbrüche auf den Verdrehwinkel angepasst, wodurch ein leichteres Verwinden des Pakets möglich oder vorgegeben ist. Ausführungsbeispiele der Erfindung werden anhand der schematischen Zeichnungen näher erläutert.

Darin zeigen:
- Fig. 1: schematisch eine Seitenansicht eines Kurzschlussläufers,
- Fig. 2: einen Detailausschnitt aus Figur 1 im Bereich A der Kurzschlussringe,
- Fig. 3: eine weitere Detailansicht der Kurzschlussringe, und
- Fig. 4: eine weitere Detailansicht der Kurzschlussringe.

Einander entsprechende Teile sind in allen Figuren mit denselben Bezugszeichen versehen.

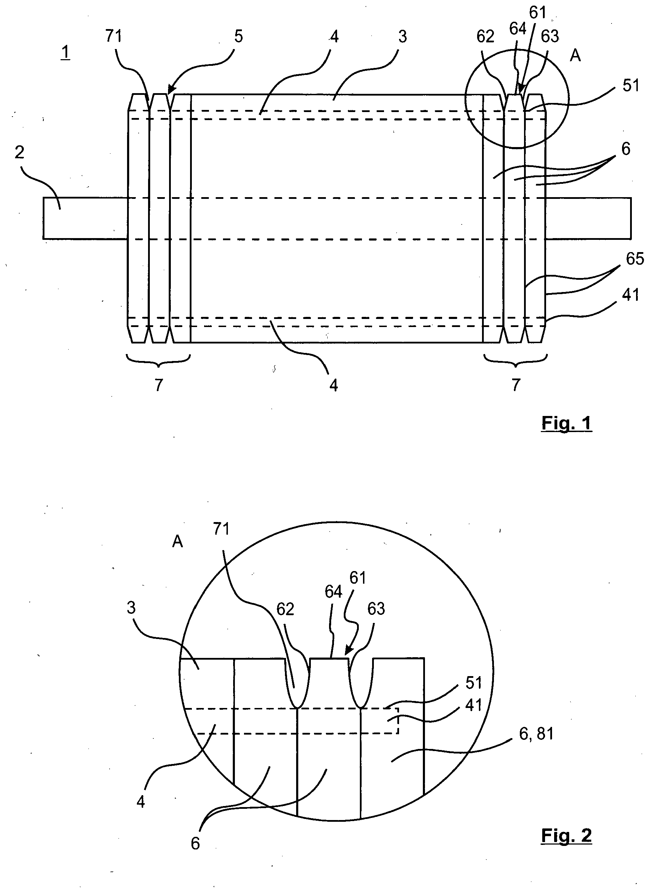

Fig. 1 zeigt schematisch eine Seitenansicht eines Kurzschlussläufers 1. In diesem Zustand ist das Läuferblechpaket 3 auf der Welle 2 positioniert, kombiniert mit zwei Kurzschlussringen 5, die das Läuferblechpaket 3 stirnseitig abschließen. Im Inneren des Blechpakets 3 und der Kurzschlussringe 5 sind mehrere Käfigstäbe 4 angeordnet. Die Stabenden 41 der Käfigstäbe 4 ragen in Ausnehmungen 51 der Kurzschlussringe 5 hinein und schließen bündig mit der letzten Scheibe 6 des Scheibenpakets 7 ab. Ein Scheibenpaket 7 besteht in diesem Fall aus drei Scheiben 6, welche an ihren Stirnseiten 61, ausgehend von der Mantelfläche 64, Fasen 62, 63 aufweisen. Die zwischen den beiden Fasen 62, 63 zweier benachbarter Scheiben 6 gebildete Nuten 71 dienen als Fügespalt der Kurzschlussringe 5. In diesem Fall ist die erste Fase 62 und die benachbarte zweite Fase 63 eben und symmetrisch ausgestaltet, so dass eine V-förmige Nut zwischen zwei Scheiben 6 entsteht. Die V-förmige Nut reicht radial gesehen bis zur Ausnehmung 51, in die die Käfigstäbe 4 eingebracht sind. Die jeweiligen Grund- bzw. Deckflächen der Scheiben 6 liegen bündig aneinander. Im Fügespalt ist in Fig. 1 noch keine Fügeverbindung, beispielsweise durch Schweißen oder Löten, realisiert.

Fig. 2 zeigt einen Detailausschnitt aus Figur 1 im Bereich A der Kurzschlussringe. In diesem Fall ist eine Nut 71 ausgestaltet, die durch parabelartige Fasen 62 und 63 ausgebildet ist. Auch in diesem Fall reicht die Nut 71 bis in die Tiefe der Ausnehmung 51 für einen Käfigstab 4. Das Blechpaket 3 schließt bündig mit der Stirnseite 61 und damit der Mantelfläche 64 der jeweiligen Scheiben 6 ab. Insbesondere beim Laserfügen sind derartige Nutformen von besonderem Vorteil. Die Nutform unterstützt letztendlich das Führen eines Laserstrahls bis in die Tiefe im Bereich des Käfigstabes 4 in der letztendlich die Fügeverbindung hergestellt werden soll. Die in Figur 1 und Figur 2 dargestellten Nuttiefen auf der Basis der jeweiligen angefasten Scheiben 6 eignen sich folglich in erster Linie für ein Laserstrahlfügen. Zudem ist die endständige Scheibe 6 als Abschlussdeckel 81 ausgeführt, indem eine nicht durchgehende Ausnehmung das äußerste Ende 41 eines Käfigstabes 4 aufnimmt. Auch der Detailausschnitt zeigt noch keine Fügeverbindung.

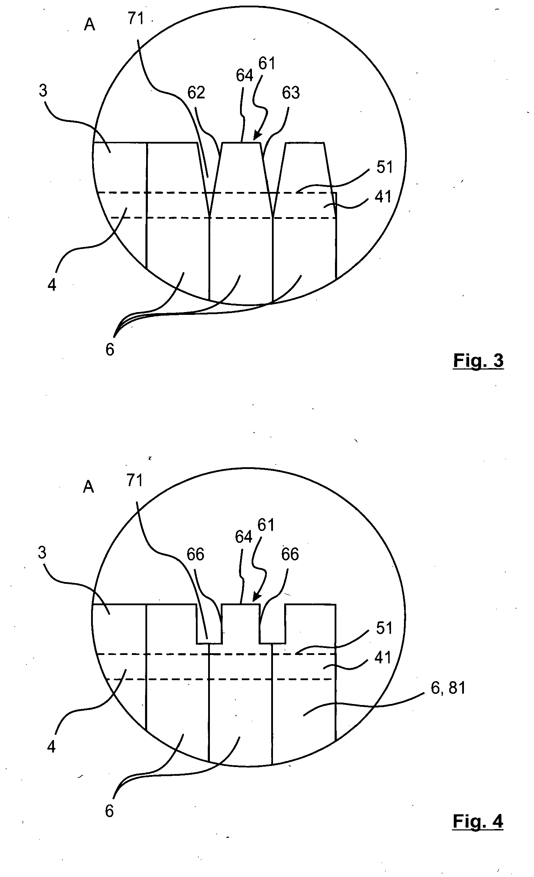

Fig. 3 zeigt eine weitere Detailansicht A der Kurzschlussringe, die insbesondere mit Hartlöten oder Schweißen als Fügeverfahren verbunden werden. In diesem Fall treten die Stäbe 4 aus dem Blechpaket 3 so aus, dass sie im Bereich der durch die erste Fase 62 und zweite Fase 63 gebildete Nut 71 zum Teil noch freiliegen. Die Ausnehmungen 51 sind folglich noch im Bereich der angefasten Scheiben positioniert. Die freiliegenden Stabbereiche in einer Nut werden beim anschließenden Fügen durch das Hartlot oder durch eine mittels Laserstrahl oder Elektronenstrahl erzeugte Schmelze umströmt und mit den Scheiben 6 elektrisch leitend verbunden.

Fig. 4 zeigt eine weitere Detailansicht A der Kurzschlussringe, die insbesondere mit Schweißen als Fügeverfahren verbunden werden. In diesem Fall treten die Stäbe 4 aus dem Blechpaket 3 so aus, dass sie im Bereich der durch die Stufen 66 gebildete Nut 71 nicht mehr freiliegen. Die Ausnehmungen 51 sind folglich etwas innerhalb der Stufe der Scheiben positioniert und liegen dennoch im Bereich der Aufschmelzzone. Die Stabbereiche in der Nähe einer Nut werden beim anschließenden Fügen durch eine mittels Laserstrahl oder Elektronenstrahl erzeugte Schmelze dennoch umströmt und mit den Scheiben 6 elektrisch leitend verbunden. Das dabei entstehende Schmelzebad ist in der Figur 4 noch nicht dargestellt.

### Bezugszeichenliste

- 1: Kurzschlussläufer
- 2: Welle
- 3: Läuferblechpaket
- 4: Käfigstab
- 41: Stabende
- 5: Kurzschlussringe
- 51: Ausnehmung
- 6: Scheibe
- 61: Stirnseite
- 62: erste Fase
- 63: zweite Fase
- 64: Mantelfläche
- 65: Grund- bzw. Deckfläche
- 66: Stufe
- 7: Scheibenpaket
- 71: Nut
- 8: Gehäuse
- 81: Abschlussdeckel
- A: Ausschnitt Detailbild

### Bezugszeichenliste (for transfer German to English)

- 1: Kurzschlussläufer short circuit rotor (motor)/ squirrel-cage rotor (motor)
- 2: Welle axle, shaft
- 3: Läuferblechpaket laminated core/stack
- 4: Käfigstab form iron
- 41: Stabende rod/iron end
- 5: Kurzschlussring short circuit ring
- 51: Ausnehmung recesses
- 6: Scheibe disc
- 61: Stirnseite front side
- 62: erste Fase first chamfer
- 63: zweite Fase second chamfer
- 64: Mantelfläche lateral surface area
- 65: Grund- bzw. Deckfläche area of the bottom / top
- 66: Stufe step
- 7: Scheibenpaket disc pack
- 71: Nut groove

## Patentansprüche

1. Kurzschlussläufer (1), insbesondere für eine Asynchronmaschine, mit Welle (2), Läuferblechpaket (3) mit im Innern angeordneten Käfigstäben (4) und Kurzschlussringen (5), wobei zumindest ein Teil eines Kurzschlussringes (5) aus einem Scheibenpaket (7) besteht, welches lagenweise aus Scheiben (6) mit Ausnehmungen (51) aufgebaut ist, durch welche die Enden der Käfigstäbe (4) aus dem Läuferblechpaket (3) hindurchtreten,
**dadurch gekennzeichnet,**
- **dass** das Scheibenpaket (7) des Kurzschlussringes (5) aus mehreren einzelnen Scheiben (6) mit gleichem Durchmesser aufgebaut ist,
- **dass** die Scheiben (6) eines Kurzschlussringes (5), ausgehend von der Mantelfläche (64) als Stirnseite (61), über den Außenumfang zumindest eine Fase (62, 63) oder Stufe (66) aufweisen, welche radial einwärts gerichtet ist, und
- **dass** benachbarte Scheiben (6) durch ihre jeweiligen Fasen (62, 63) oder Stufen (66) im Scheibenpaket (7) eine Nut (71) ausbilden, in der zumindest abschnittsweise eine Fügeverbindung vorhanden ist.

2. Kurzschlussläufer (1) nach Anspruch 1, **dadurch gekennzeichnet, dass** die Stabenden (41) mit dem Scheibenpaket (7) eines Kurzschlussringes (5) elektrisch leitend gefügt sind.

3. Kurzschlussläufer (1) nach Anspruch 2, **dadurch gekennzeichnet, dass** die Fügeverbindungen umfänglich verlaufen.

4. Kurzschlussläufer (1) nach Anspruch 2 oder 3, **dadurch gekennzeichnet, dass** die Fügeverbindungen Schweißverbindungen oder Lötverbindungen sind.

5. Kurzschlussläufer (1) nach einem der Ansprüche 1 bis 4, **dadurch gekennzeichnet, dass** die Scheiben (6) eine Dicke von 2 mm bis 10 mm, bevorzugt 3 bis 6 mm, aufweisen.

6. Kurzschlussläufer (1) nach einem der Ansprüche 1 bis 5, **dadurch gekennzeichnet, dass** die Scheiben (6) aus einer Stahllegierung oder einer Kupferlegierung, insbesondere aus einer Cu-Cr-Zr-, Cu-Ag- oder Al-Legierung, bestehen.

7. Kurzschlussläufer (1) nach einem der Ansprüche 1 bis 6, **dadurch gekennzeichnet, dass** die Scheiben (6) am Außenumfang zwei symmetrisch zueinander liegende Fasen (62, 63) oder Stufen (66) aufweisen.

8. Kurzschlussläufer (1) nach einem der Ansprüche 1 bis 7, **dadurch gekennzeichnet, dass** die Käfigstäbe (4) radial zum Zentrum hin vorgespannt sind.

9. Kurzschlussläufer (1) nach einem der Ansprüche 1 bis 8, **dadurch gekennzeichnet, dass** ein Kurzschlussring (5) zumindest teilweise von einem Gehäuse (8) umschlossen ist.

10. Kurzschlussläufer (1) nach Anspruch 9, **dadurch gekennzeichnet, dass** um den Umfang eines Kurzschlussringes (5) als Gehäuse (8) ein Spannring angeordnet ist.

11. Kurzschlussläufer (1) nach Anspruch 9 oder 10, **dadurch gekennzeichnet, dass** als Gehäuse (8) stirnseitig ein Abschlussdeckel (81) angeordnet ist.

12. Verfahren zur Herstellung eines Kurzschlussläufers (1) nach einem der Ansprüche 1 bis 11, **dadurch gekennzeichnet,**
- **dass** das Läuferblechpaket (3) auf der Welle (2) angeordnet wird,
- **dass** auf der Welle (2) Kurzschlussringe (5) angeordnet werden, die aus um den Außenumfang angefasten Scheiben (6) mit Ausnehmungen (51) lagenweise zu einem Scheibenpaket (7) zusammengesteckt werden, wobei die Enden der Käfigstäbe (4) aus dem Läuferblechpaket (3) durch die Ausnehmungen hindurchtreten können,
- **dass** im Innern des Läuferblechpakets (3) und in den Ausnehmungen (51) der Scheiben (6) Käfigstäbe (4) angeordnet werden,
- **dass** um den Außenumfang des Scheibenpaketes (7) der Kurzschlussringe (5) im Bereich der Fase oder Stufe eine Fügeverbindung hergestellt wird.

13. Verfahren nach Anspruch 12, **dadurch gekennzeichnet, dass** vor dem
Herstellern der Fügeverbindung das Scheibenpaket (7) und das Läuferblechpaket (3) in sich verwunden wird.

## Claims

1. Squirrel-cage rotor (1), in particular for an asynchronous machine, having a shaft (2), rotor plate assembly (3) having cage rods (4) and short-circuit rings (5) which are arranged at the inner side, wherein at least a portion of a short-circuit ring (5) comprises a disc assembly (7) which is constructed in layers from discs (6) with recesses (51) through which the ends of the cage rods (4) extend from the rotor plate assembly (3),
**characterised in that**
- the disc assembly (7) of the short-circuit ring (5) is constructed from a plurality of individual discs (6) with the same diameter,
- **in that** the discs (6) of a short-circuit ring (5), starting from the covering face (64) as an end face (61), have over the outer periphery at least one chamfer (62, 63) or step (66) which is directed radially inwards, and
- **in that** the adjacent discs (6) form by means of the respective chamfers (62, 63) or steps (66) thereof in the disc assembly (7) a groove (71) in which a joint connection is at least partially present.

2. Squirrel-cage rotor (1) according to claim 1, **characterised in that** the rod ends (41) are joined in an electrically conductive manner to the disc assembly (7) of a short-circuit ring (5).

3. Short-circuit rotor (1) according to claim 2, **characterised in that** the joint connections extend peripherally.

4. Squirrel-cage rotor (1) according to claim 2 or 3, **characterised in that** the joint connections are weld connections or solder connections.

5. Squirrel-cage rotor (1) according to any one of claims 1 to 4, **characterised in that** the discs (6) have a thickness of from 2 mm to 10 mm, preferably from 3 mm to 6 mm.

6. Squirrel-cage rotor (1) according to any one of claims 1 to 5, **characterised in that** the discs (6) comprise a steel alloy or a copper alloy, in particular a Cu-Cr-Zr, Cu-Ag or Al alloy.

7. Squirrel-cage rotor (1) according to any one of claims 1 to 6, **characterised in that** the discs (6) have on the outer periphery two chamfers (62, 63) or steps (66) which are located symmetrically relative to each other.

8. Squirrel-cage rotor (1) according to any one of claims 1 to 7, **characterised in that** the cage rods (4) are pretensioned radially towards the centre.

9. Squirrel-cage rotor (1) according to any one of claims 1 to 8, **characterised in that** a short-circuit ring (5) is surrounded at least partially by a housing (8).

10. Squirrel-cage rotor (1) according to claim 9, **characterised in that** a clamping ring is arranged around the periphery of a short-circuit ring (5) as a housing (8).

11. Squirrel-cage rotor (1) according to claim 9 or 10, **characterised in that** a closure cover (81) is arranged as a housing (8) at the end face.

12. Method for producing a squirrel-cage rotor (1) according to any one of claims 1 to 11, **characterised in that**
- the rotor plate assembly (3) is arranged on the shaft (2),
- **in that** there are arranged on the shaft (2) short-circuit rings (5) which are fitted together from discs (6) which are chamfered around the outer periphery with recesses (51) in layers to form a disc assembly (7),
wherein the ends of the cage rods (4) can extend from the rotor plate assembly (3) through the recesses,
- **in that** cage rods (4) are arranged inside the rotor plate assembly (3) and in the recesses (51) of the discs (6),
- **in that** around the outer periphery of the disc assembly (7) of the short-circuit rings (5) a joint connection is produced in the region of the chamfer or step.

13. Method according to claim 12, **characterised in that**, before the joint connection is produced, the disc assembly (7) and the rotor plate assembly (3) are twisted in each other.

## Revendications

1. Rotor en court-circuit (1), en particulier pour une machine asynchrone, doté d'un arbre (2), d'un paquet de tôles de rotor (3) avec agencés à l'intérieur des barres de cage (4)et des bagues de court-circuit (5), dans lequel au moins une partie d'une bague de court-circuit (5) consiste en un paquet de plaques (7), lequel est constitué par couches de plaques (6) avec des évidements (51) à travers lesquels les extrémités des barres de cage (4) passent depuis le paquet de tôles de rotor (3),
**caractérisé**
- **en ce que** le paquet de plaques (7) de la bague de court-circuit (5) est constitué de plusieurs plaques (6) individuelles avec le même diamètre,
- **en ce que** les plaques (6) d'une bague de court-circuit (5) présentent, en partant de la surface d'enveloppe (64) en tant que côté frontal (61) et en passant par dessus la périphérie extérieure, au moins un palier (62, 63) ou étage (66), lequel est dirigé radialement vers l'intérieur, et
- **en ce que** des plaques (6) adjacentes forment dans le paquet de plaques (7), au travers de leurs paliers (62, 63) ou étages (66) respectifs, une rainure (71) dans laquelle au moins par endroits une liaison par joint est présente.

2. Rotor en court-circuit (1) selon la revendication 1, **caractérisé en ce que** les extrémités de barre (41) sont assemblées de manière électriquement conductrice avec le paquet de plaques (7) d'une bague de court-circuit (5).

3. Rotor en court-circuit (1) selon la revendication 2, **caractérisé en ce que** les liaisons par joint courent sur la périphérie.

4. Rotor en court-circuit (1) selon la revendication 2 ou 3, **caractérisé en ce que** les liaisons par joint sont des liaisons par soudage ou des liaisons par brasage.

5. Rotor en court-circuit (1) selon l'une quelconque des revendications 1 à 4, **caractérisé en ce que** les plaques (6) présentent une épaisseur de 2 mm à 10 mm, de préférence de 3 mm à 6 mm.

6. Rotor en court-circuit (1) selon l'une quelconque des revendications 1 à 5, **caractérisé en ce que** les plaques (6) consistent en un alliage d'acier ou un alliage de cuivre, en particulier en un alliage Cu-Cr-Zr, Cu-Ag ou Al.

7. Rotor en court-circuit (1) selon l'une quelconque des revendications 1 à 6, **caractérisé en ce que** les plaques (6) présentent sur la périphérie extérieure deux paliers (62, 63) ou étages (66) situés symétriquement l'un par rapport à l'autre.

8. Rotor en court-circuit (1) selon l'une quelconque des revendications 1 à 7, **caractérisé en ce que** les barres de cage (4) sont précontraintes radialement en allant vers le centre.

9. Rotor en court-circuit (1) selon l'une quelconque des revendications 1 à 8, **caractérisé en ce qu'**une bague de court-circuit (5) est enserrée au moins partiellement dans un logement (8).

10. Rotor en court-circuit (1) selon la revendication 9, **caractérisé en ce qu'**en tant que logement (8), une bague de serrage est agencée sur la périphérie d'une bague de court-circuit (5).

11. Rotor en court-circuit (1) selon la revendication 9 ou 10, **caractérisé en ce qu'**en tant que logement (8), un couvercle de fermeture (81) est agencé du côté frontal.

12. Procédé de fabrication d'un rotor en court-circuit (1) selon l'une quelconque des revendications 1 à 11, **caractérisé**
- **en ce que** le paquet de tôles de rotor (3) est agencé sur l'arbre (2),
- **en ce que** sur l'arbre (2) sont agencées des bagues de court-circuit (5) qui, à partir des plaques (6) chanfreinées sur la périphérie extérieure, sont emboîtées ensemble par couches avec des évidements (51) pour former un paquet de plaques (7), dans lequel les extrémités des barres de cage (4) peuvent passer depuis le paquet de tôles de rotor (3) au travers des évidements,
- **en ce que** des barres de cage (4) sont agencées à l'intérieur du paquet de tôles de rotor (3) et dans les évidements (51) des plaques (6),
- **en ce qu'**une liaison par joint est réalisée sur la périphérie extérieure du paquet de plaques (7) des bagues de court-circuit (5) dans la région des paliers ou étages.

13. Procédé selon la revendication 12, **caractérisé en ce que** le paquet de plaques (7) et le paquet de tôles de rotor (3) est gauchi avant la fabrication de la liaison par joint.
